(19) Europäisches Patentamt
European Patent Office
Office européen des brevets

(11) **EP 2 243 236 B1**

(12) **EUROPÄISCHE PATENTSCHRIFT**

(45) Veröffentlichungstag und Bekanntmachung des Hinweises auf die Patenterteilung:
**14.11.2012 Patentblatt 2012/46**

(21) Anmeldenummer: **08872359.8**

(22) Anmeldetag: **09.12.2008**

(51) Int Cl.:
***H04J 13/00*** *(2011.01)*

(86) Internationale Anmeldenummer:
**PCT/EP2008/010439**

(87) Internationale Veröffentlichungsnummer:
**WO 2009/100746 (20.08.2009 Gazette 2009/34)**

(54) **ANORDNUNG ZUR ERZEUGUNG VON POLYPHASENSEQUENZEN**

CIRCUIT FOR PRODUCING POLYPHASE SEQUENCES

CIRCUIT POUR GÉNÉRER DES SÉQUENCES POLYPHASES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.02.2008 DE 102008008617**

(43) Veröffentlichungstag der Anmeldung:
**27.10.2010 Patentblatt 2010/43**

(73) Patentinhaber: **Rohde & Schwarz GmbH & Co. KG 81671 München (DE)**

(72) Erfinder: **SCHUMACHER, Adrian 81541 München (DE)**

(74) Vertreter: **Körfer, Thomas et al Mitscherlich & Partner Patent- und Rechtsanwälte Sonnenstrasse 33 80331 München (DE)**

(56) Entgegenhaltungen:
**EP-A- 1 314 997     US-A- 4 333 080 US-A- 6 041 337**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 243 236 B1

**Beschreibung**

Die Erfindung betrifft eine Anordnung, insbesondere eine elektronische Schaltungsanordnung, zur Erzeugung von Polyphasensequenzen, insbesondere als Synchronisationssequenzen und Referenzsequenzen in Funkkommunikationssystemen.

Herkömmlich werden zur Synchronisation in Funkkommunikationssystemen Sequenzen günstiger Korrelationseigenschaften, unter anderem einer geringen Autokorrelation, herangezogen. Polyphasensequenzen haben sich dabei als sehr geeignet erwiesen. Die Erzeugung dieser Sequenzen ist bislang, insbesondere wenn dies in einer konfigurierbaren Art und Weise erfolgen soll, sehr aufwendig. Eine verbreitete Methode ist die Vorhaltung sämtlicher benötigter Sequenzen in einem Speicher. Dies erfordert jedoch aufwendige Speicher und schränkt die Flexibilität des Einsatzes ein.

Dokument EP1 314 997 A1 offenbart eine Anordnung zur Erzeugung von Polyphasensequenzen, mit einer Trigonometrie-Einrichtung, wobei die Trigonometrie-Einrichtung aus einem gebildeten Wert den Realteil und den Imaginärteil des gegenwärtigen Werts der Polyphasensequenz bildet.

So wird in der US 2005/0128938 A1 die Verwendung von Polyphasensequenzen zur Synchronisation von OFDM-Signalen gezeigt. Ein effizientes Verfahren oder eine effiziente Vorrichtung zur Erzeugung dieser Sequenzen werden jedoch nicht dargestellt.

Der Erfindung liegt die Aufgabe zu Grunde, eine Anordnung zu schaffen, welche bei geringem Herstellungsaufwand und hoher Verarbeitungsgeschwindigkeit flexibel verschiedene Polyphasensequenzen erzeugt.

Die Aufgabe wird erfindungsgemäß durch die Merkmale des unabhängige Anspruchs 1 gelöst. Vorteilhafte Weiterbildungen sind Gegenstand der hierauf rückbezogenen Unteransprüche.

Die erfindungsgemäße Anordnung zur Erzeugung von Polyphasensequenzen als Synchronisationssequenzen und/oder Referenzsequenzen in Funkkommunikationssystemen verfügt über einen ersten Addierer, einen ersten Multiplizierer, ein erstes Register, ein zweites Register, einen ersten Zähler und eine Trigonometrie-Einrichtung. Der erste Addierer addiert einen aus dem Wert des Zählers gebildeten Wert zu dem Wert des ersten Registers. Der erste Multiplizierer multipliziert den Wert des zweiten Registers mit einem aus dem Wert des ersten Registers und dem Wert des Zählers gebildeten Wert. Die Trigonometrie-Einrichtung bildet aus einem zumindest aus dem Ausgabewert des ersten Multiplizierers gebildeten Wert den Realteil und den Imaginärteil des gegenwärtigen Werts der Polyphasensequenz. So können unter Einsatz einer geringen Bauteilanzahl und damit geringen Herstellungskosten Polyphasensequenzen erzeugt werden. Eine hohe Verarbeitungsgeschwindigkeit ist so zu erzielen.

Die elektronische Schaltungsanordnung beinhaltet weiterhin eine Modulo-Einrichtung. Die Modulo-Einrichtung bildet den Modulo N des Werts des ersten Zählers, wobei N die Länge der Polyphasensequenz ist. Der erste Addierer addiert den Modulo N des Werts des ersten Zählers zu dem Wert des ersten Registers. So können beliebige Standardzähler eingesetzt werden, ohne den Wertebereich berücksichtigen zu müssen. Dies reduziert weiterhin den Herstellungsaufwand.

Vorteilhafterweise verfügt die elektronische Schaltungsanordnung weiterhin über einen zweiten Multiplizierer. Der zweite Multiplizierer multipliziert bevorzugt einen aus dem Wert des Zählers gebildeten Wert mit der Ausgabe des ersten Addierers. Bevorzugt ist der aus dem Wert des ersten Registers und dem Wert des Zählers gebildete Wert, welcher von dem ersten Multiplizierer multipliziert wird, der Ausgabewert des zweiten Multiplizierers. So kann die aufwendige Quadrierung vermieden werden. Eine weitere Steigerung der Verarbeitungsgeschwindigkeit ist so möglich.

Der Ausgabewert des ersten Multiplizierers ist bevorzugt direkt der Eingabewert der Trigonometrie-Einrichtung. So kann ohne weitere Verarbeitungsschritte der abschließende Schritt, die Berechnung der Realteile und Imaginärteile, erfolgen. Eine hohe Verarbeitungsgeschwindigkeit wird so erreicht.

In einer weiteren Ausgestaltung beinhaltet die elektronische Schaltungsanordnung ein drittes Register, einen dritten Multiplizierer, einen zweiten Zähler und einen zweiten Addierer. Der dritte Multiplizierer multipliziert bevorzugt den Wert des dritten Registers mit dem Wert des zweiten Zählers. Der zweite Addierer addiert bevorzugt den negativen Ausgabewert des dritten Multiplizierers zu dem Ausgabewert des ersten Multiplizierers. Der Ausgabewert des zweiten Addierers ist bevorzugt direkt der Eingabewert der Trigonometrie-Einrichtung. So ist eine Verschiebung der Polyphasensequenz im Zeitbereich möglich. Eine große Flexibilität des Einsatzes wird so erreicht.

In einer weiteren Ausgestaltung beinhaltet die elektronische Schaltungsanordnung weiterhin bevorzugt einen zweiten Addierer und einen zweiten Multiplizierer. Der erste Multiplizierer multipliziert vorteilhafterweise den Wert des zweiten Registers direkt mit dem Ausgabewert des ersten Addierers. Der zweite Addierer addiert vorteilhafterweise den Ausgabewert des ersten Multiplizierers zu einem aus dem Wert des ersten Zählers gebildeten Wert. So wird die benötigte Bauteilanzahl weiter reduziert und damit der Herstellungsaufwand weiter reduziert.

Die elektronische Schaltungsanordnung beinhaltet bevorzugt weiterhin ein drittes Register. Der zweite Multiplizierer multipliziert bevorzugt den Ausgabewert des zweiten Addierers mit dem Wert des dritten Registers. Der Ausgabewert des zweiten Multiplizierers ist bevorzugt direkt der Eingabewert der Trigonometrie-Einrichtung. So kann auch bei dieser Ausgestaltung eine zeitliche Verschiebung der Polyphasensequenz erzielt werden, und damit die Flexibilität des Einsatzes erhöht werden.

Der erste Zähler ist bevorzugt mit einem Startwert beaufschlagbar. So können bestimmte Polyphasensequenzen gezielt erzeugt werden. Auch ein Einsatz zufälliger Sequenzen ist durch zufällige Auswahl des Startwerts des Zählers möglich.

Die Register und/oder die Addierer und/oder die Multiplizierer und/oder die Zähler und/oder die Modulo-Einrichtung und/oder die Trigonometrie-Einrichtung sind vorteilhafterweise mittels eines Mikroprozessors, eines FPGAs oder eines ASIC realisiert. So können preiswerte Standardkomponenten zur Herstellung eingesetzt werden.

Weiterhin ist bei Einsatz eines programmierbaren Mikroprozessors eine große Flexibilität sowohl in der Entwicklung als auch im Einsatz gegeben.

Nachfolgend wird die Erfindung anhand der Zeichnung, in der vorteilhafte Ausführungsbeispiele der Erfindung dargestellt sind, beispielhaft beschrieben. In der Zeichnung zeigen:

Fig. 1      ein erstes Ausführungsbeispiel der erfindungsgemäßen Schaltungsanordnung;

Fig. 2      ein zweites Ausführungsbeispiel der erfindungsgemäßen Schaltungsanordnung, und

Fig. 3      ein drittes Ausführungsbeispiel der erfindungsgemäßen Schaltungsanordnung.

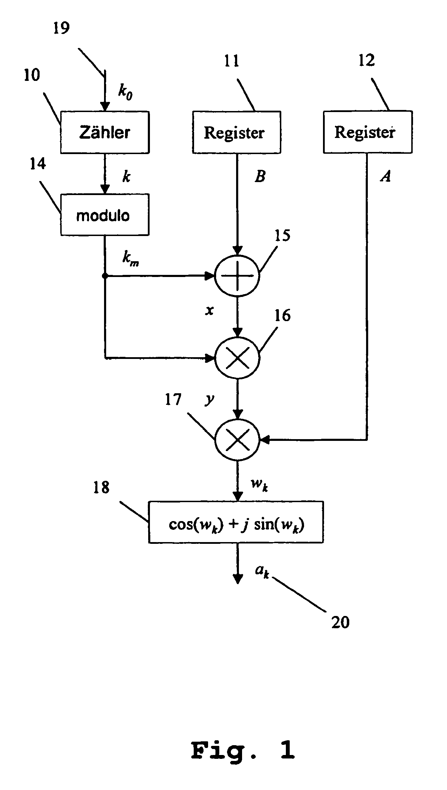

Zunächst wird allgemein der mathematische Hintergrund von Polyphasensequenzen gezeigt. Anschließend wird anhand der Fig. 1 - 3 der Aufbau und die Funktionsweise verschiedener Ausführungsbeispiele der erfindungsgemäßen Vorrichtung erläutert. Identische Elemente wurden in ähnlichen Abbildungen zum Teil nicht wiederholt dargestellt und beschrieben.

Zunächst wird der mathematische Hintergrund der Erzeugung von Polyphasensequenzen gezeigt. Die folgenden Gleichungen (1) und (2) definieren die allgemeine Form von Polyphasensequenzen für ungeradzahlige (1) und geradzahlige (2) Sequenzlängen.

$$a_k = e^{-j\frac{2\pi u}{N}\left(\frac{k(k+1)}{2}+qk\right)} \qquad (1)$$

$$a_k = e^{-j\frac{2\pi u}{N}\left(\frac{k^2}{2}+qk\right)} \qquad (2)$$

Der Index k läuft von 0 bis $N$-1, $N$ ist die Länge der Sequenzen. Für optimale Korrelationseigenschaften muss die Bedingung $N = s \cdot m^2$ erfüllt werden. $s$ und $m$ sind positive ganze Zahlen. Die Variable u gibt die $u$-te Wurzel Zadoff-Chu Sequenz an, und kann jede Integer-Zahl, welche relativ prim zu N ist, sein. $q$ is eine beliebige ganze Zahl. Durch Umformung werden die beiden Gleichungen (1) und (2) als Gleichung (3) ausgedrückt:

$$a_k = e^{jAk(k+B)} \qquad (3)$$

Um nun eine Sequenz nach Gleichung (1) zu erhalten, wird

$$A = -\frac{u\pi}{N},$$

und

$$B = 2q + 1$$

gesetzt.

Um eine Sequenz nach Gleichung (2) zu erhalten, wird

$$A = -\frac{u\pi}{N},$$

und

$$B = 2q$$

gesetzt.

Fig. 1 zeigt ein erstes Ausführungsbeispiel der erfindungsgemäßen Vorrichtung. Ein Zähler 10 ist mit einer Modulo-Einrichtung 14 verbunden. Die Modulo-Einrichtung 14 ist mit dem Eingang eines Addierers 15 verbunden. Ein erstes Register 11 ist mit dem zweiten Eingang des Addierers 15 verbunden. Ein zweites Register 12 ist mit einem ersten Eingang eines ersten Multiplizierers 17 verbunden. Der Ausgang des Addierers 15 ist mit einem ersten Eingang eines zweiten Multiplizierers 16 verbunden. Die Modulo-Einrichtung 14 ist mit einem zweiten Eingang des zweiten Multiplizierers 16 verbunden. Der Ausgang des zweiten Multiplizierers 16 ist mit einem Eingang des ersten Multiplizierers 17 verbunden. Der Ausgang des ersten Multiplizierers 17 ist mit einer Trigonometrie-Einrichtung 18 verbunden.

Der Zähler 10 wird mittels eines Startwerts $k_0$ 19 initialisiert. Der Zähler beginnt bei dem Startwert $k_0$ 19 zu zählen. So ist eine zyklische Verschiebung der Sequenz durch Auswahl eines geeigneten Startwerts $k_0$ 19 möglich. Der aktuelle Zählwert k wird der Modulo-Einrichtung 14 zugeführt. Diese berechnet den Modulo N des Zählwerts k. Der resultierende Wert $k_m$ wird an den Addierer 15 weitergeleitet. Der Addierer 15 addiert den Wert $k_m$ und den Wert des ersten Registers 11. Der resultierende Wert x wird von dem zweiten Multiplizierer 16 mit dem Ausgabewert der Modulo-Einrichtung 14 multipliziert und als Wert y an den ersten Multiplizierer 17 weitergeleitet. Dieser multipliziert den Wert des zweiten Registers 12 mit dem Wert y. Das Ergebnis $w_k$ des ersten Multiplizierers 17 wird an die Trigonometrie-Einrichtung 18 weitergeleitet. Diese bestimmt den Realteil und den Imaginärteil, welche dem "Winkel" $w_k$ entspricht und den Realteil und Imaginärteil des aktuellen Werts der Polyphasensequenz darstellt. Durch Wiederholung der gezeigten Schritte wird die gesamte Polyphasensequenz in der gewünschten Länge erzeugt.

Durch diesen Aufbau wird eine aufwendige Quadrierungseinrichtung als Teil der elektronischen Schaltung vermieden. So kann eine hohe Verarbeitungsgeschwindigkeit trotz geringen Aufwands der Herstellung realisiert werden.

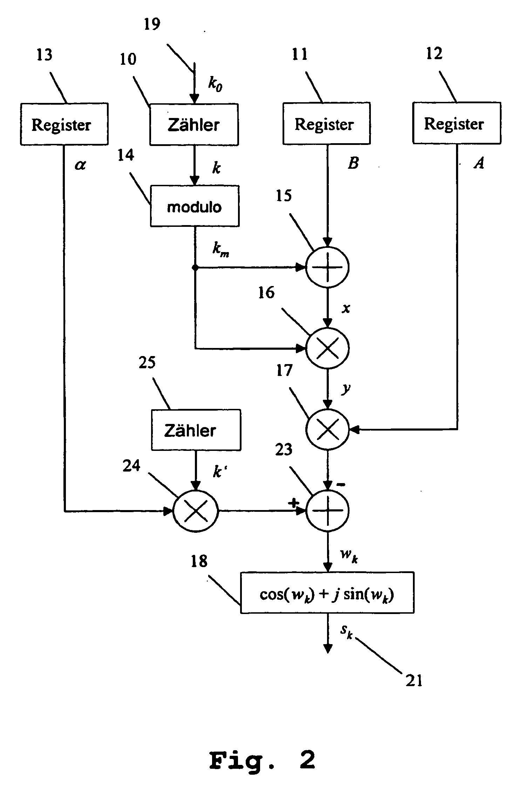

Fig. 2 zeigt ein zweites Ausführungsbeispiel der erfindungsgemäßen Vorrichtung. Das zweite Ausführungsbeispiel entspricht in weiten Teilen dem ersten Ausführungsbeispiel. Auf die übereinstimmenden Teile wird hier nicht näher eingegangen. Jedoch ist der Ausgang des ersten Multiplizierers 17 in diesem Ausführungsbeispiel nicht direkt mit der Trigonometrie-Einrichtung 18 verbunden. Stattdessen ist der Ausgang des ersten Multiplizierers 17 mit einem Eingang eines zweiten Addierers 23 verbunden. Ein drittes Register 13 ist mit einem Eingang eines dritten Multiplizierers 24 verbunden. Ein weiterer Eingang des dritten Multiplizierers 24 ist mit einem zweiten Zähler 25 verbunden. Der Ausgang des dritten Multiplizierers 24 ist mit einem zweiten Eingang des zweiten Addierers 23 verbunden. Der Ausgang dieses zweiten Addieres ist in diesem Ausführungsbeispiel nun mit der Trigonometrie-Einrichtung 18 verbunden.

Die Funktion der mit dem Ausführungsbeispiel aus Fig. 1 übereinstimmenden Teile dieses Ausführungsbeispiels deckt sich ebenfalls mit der Funktion der entsprechenden Teile. Es wird lediglich auf die Unterschiede eingegangen. Der dritte Multiplizierer 24 multipliziert den Wert $\alpha$ des dritten Registers 13 mit dem Wert k' des zweiten Zählers 25. Der Ausgabewert des ersten Multiplizierers 17 wird von dem zweiten Addierer 23 von dem Ausgabewert des dritten Multiplizierers 24 subtrahiert. Der resultierende Wert $w_k$ wird an die Trigonometrie-Einrichtung 18 weitergeleitet. Diese bestimmt den Realteil und den Imaginärteil, welche dem "Winkel" $w_k$ entsprechen und den Realteil und Imaginärteil des aktuellen Werts der Polyphasensequenz darstellen. Durch Wiederholung der gezeigten Schritte wird die gesamte Polyphasensequenz in der gewünschten Länge erzeugt.

Um eine Verschiebung der Sequenz im Zeitbereich zu erzielen, wird eine weitere Multiplikation mit dem

Faktor $e^{j\alpha k'}$, wie in Gleichung (4) gezeigt, durchgeführt.

$$s_k = e^{j\alpha k'} a_k \quad (4)$$

In dem Ausführungsbeispiel ist dies durch Beaufschlagung des dritten Registers mit einem Wert realisiert. Da der zusätzliche Exponent j * k' * α vor der Bestimmung des Realteils und des Imaginärteils miteinbezogen wird, genügt eine aufwandsarme Addition. Die Ausführung einer Multiplikation wird damit verhindert. Die Zählerwerte k und k' können dabei unterschiedlich sein. Dies ermöglicht einerseits eine große Flexibilität des Einsatzes. Andererseits wird so der zusätzliche Zähler 25 und der zusätzliche Multiplikator 24 benötigt.

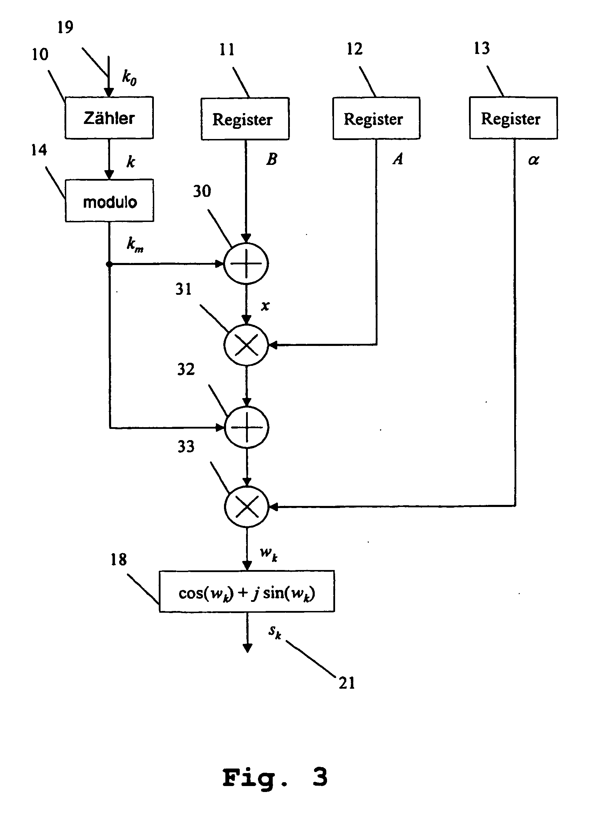

In Fig. 3 wird ein drittes Ausführungsbeispiel gezeigt, in welchem nur ein Zählerwert k eingesetzt wird und damit eine geringere Komplexität der elektronischen Schaltung erreicht wird.

Zur weiteren Senkung der Komplexität der Schaltung werden bei den in Fig. 1 und Fig. 2 dargestellten Ausführungsbeispielen zunächst die Integer-Werte des Zählers 10 und des zweiten Registers 11 addiert und multipliziert. Erst anschließend wird mit dem nicht ganzzahligen Wert des ersten Registers 12 multipliziert. So wird die Länge der Zwischenspeicher begrenzt. Weiterhin wird so die Anzahl der zu multiplizierenden Stellen minimiert. Das dritte Ausführungsbeispiel unterscheidet sich deutlich von den ersten beiden Ausführungsbeispielen.

Deshalb wird die gesamte Struktur dieses Ausführungsbeispiels im Folgenden eigenständig erläutert.

Ein Zähler 10 ist mit einer Modulo-Einrichtung 14 verbunden. Die Modulo-Einrichtung 14 ist mit dem Eingang eines ersten Addierers 30 verbunden. Ein erstes Register 11 ist mit dem zweiten Eingang des ersten Addierers 30 verbunden. Ein zweites Register 12 ist mit einem ersten Eingang eines ersten Multiplizierers 31 verbunden. Der Ausgang des ersten Addierers 30 ist mit einem zweiten Eingang des ersten Multiplizierers 31 verbunden. Der Ausgang des ersten Multiplizierers 31 ist mit einem Eingang eines zweiten Addierers 32 verbunden. Der zweite Eingang des zweiten Addierers 32 ist ebenfalls mit der Modulo-Einrichtung 14 verbunden. Der Ausgang des zweiten Addierers 32 ist mit einem Eingang eines zweiten Multiplizierers 33 verbunden. Ein zweiter Eingang des zweiten Multiplizierers 33 ist mit einem dritten Register 13 verbunden. Der Ausgang des zweiten Multiplizierers 33 ist mit der Trigonometrie-Einrichtung 18 verbunden.

Der Zähler 10 gibt seinen Zählwert k an die Modulo-Einrichtung 14 weiter. Auch hier kann der Zähler 10 mit einem Startwert $k_0$ 19 beaufschlagt werden, um eine zyklische Verschiebung der Sequenz zu erreichen. Die Modulo-Einrichtung 14 leitet ihren Ausgangswert $k_m$ an einen ersten Eingang des ersten Addierers 30 weiter. Der Wert B des zweiten Registers 11 wird an einen weiteren Eingang des ersten Addierers 30 geleitet. Der erste Addierer 30 gibt seinen Ausgangswert x an einen ersten Eingang des ersten Multiplizierers 31 weiter. Das erste Register 12 gibt seinen Wert A an einen zweiten Eingang des ersten Multiplizierers 31 weiter. Der Ausgangswert des ersten Multiplizierers 31 wird an einen ersten Eingang des zweiten Addierers 32 weitergeleitet. Der Ausgangswert $k_m$ der Modulo-Einrichtung 14 wird an einen zweiten Eingang des zweiten Addierers 32 geleitet. Die Ausgabe des zweiten Addierers 32 dient als Eingabe in einen ersten Eingang des zweiten Multiplizierers 33. Der Wert des dritten Registers 13 wird an einen zweiten Eingang des zweiten Multiplizierers 33 übertragen. Der Ausgabewert $w_k$ des zweiten Multiplizierers 33 wird direkt an die Trigonometrie-Einrichtung 18 übertragen. Diese bestimmt daraus den Realteil und den Imaginärteil der Polyphasensequenz 21 $s_k$.

In diesem Ausführungsbeispiel wird der Faktor $e^{j\alpha k}$, wie in Gleichung (5) gezeigt, multipliziert, um eine Verschiebung im Zeitbereich zu erreichen.

$$ s_k = e^{j\alpha k} a_k \quad (5) $$

Da nur ein Zähler eingesetzt wird, ist eine geringere Flexibilität des Einsatzes die Folge. Jedoch wird die Komplexität der Schaltung deutlich reduziert. So kann auf einen dritten Multiplizierer und auf einen zweiten Zähler verzichtet werden.

Weiterhin ist bei sämtlichen Ausführungsbeispielen eine weitere Modulation der Polyphasensequenzen $a_k$ oder $s_k$ mit komplexen Zahlen mit dem Absolutwert 1 möglich. Diese Modulation wird an dem Ausgangssignal des gezeigten Polyphasengenerators durchgeführt.

Die Erfindung ist nicht auf die dargestellten Ausführungsbeispiele beschränkt. So ist auch eine Implementierung rein in Software denkbar. Auch eine implementierung mittels diskreter Hardwarebauteile ist möglich. Eine Aufteilung der Schaltung auf mehrere der beschriebenen Implementierungsmöglichkeiten ist darüber hinaus eine Möglichkeit.

**Patentansprüche**

1.  Anordnung zur Erzeugung von Polyphasensequenzen,
    mit einem ersten Addierer (15, 30), einem ersten Multiplizierer (17, 31), einem ersten Register (11), einem zweiten Register (12), einem ersten Zähler (10) und einer Trigonometrie-Einrichtung (18),
    wobei der erste Addierer (15, 30) einen aus dem Wert des ersten Zählers (10) gebildeten Wert ($k_m$) zu dem Wert (B) des ersten Registers (11) addiert,
    wobei der erste Multiplizierer (17, 31) den Wert (A) des zweiten Registers (12) mit einem aus dem Wert (B) des ersten Registers (11) und dem Wert (k) des ersten Zählers (10) gebildeten Wert (y) multipliziert, wobei die Trigonometrie-Einrichtung (18) aus einem zumindest aus dem Ausgabewert des ersten Multiplizierers (17, 31) gebildeten Wert ($w_k$) den Realteil und den Imaginärteil des gegenwärtigen Werts ($a_k$, $s_k$) der Polyphasensequenz bildet,
    wobei die Anordnung weiterhin eine Modulo-Einrichtung (14) beinhaltet,
    wobei die Modulo-Einrichtung (14) den Modulo N ($k_m$) des Werts (k) des ersten Zählers (10) bildet,
    wobei der erste Addierer (15, 30) den Modulo N ($k_m$) des Werts (k) des ersten Zählers (10) zu dem Wert (B) des ersten Registers (11) addiert, und
    wobei N die Länge der Polyphasensequenz ist.

2.  Anordnung nach Anspruch 1,
    **dadurch gekennzeichnet,**
    **dass** die Anordnung weiterhin über einen zweiten Multiplizierer (16) verfügt,
    **dass** der zweite Multiplizierer (16) einen aus dem Wert des Zählers (10) gebildeten Wert ($k_m$) mit der Ausgabe des ersten Addierers (15) multipliziert, und
    **dass** der aus dem Wert (B) des ersten Registers (11) und dem Wert (k) des ersten Zählers (10) gebildete Wert (y), welcher von dem ersten Multiplizierer (17) gebildet wird, der Ausgabewert (y) des zweiten Multiplizierers (16) ist.

3.  Anordnung nach Anspruch 2,
    **dadurch gekennzeichnet,**
    **dass** der Ausgabewert ($w_k$) des ersten Multiplizierers (17) direkt der Eingabewert der Trigonometrie-Einrichtung (18) ist.

4.  Anordnung nach Anspruch 2,
    **dadurch gekennzeichnet,**
    **dass** die Anordnung ein drittes Register (13), einen dritten Multiplizierer (24), einen zweiten Zähler (25) und einen zweiten Addierer (23) beinhaltet,
    **dass** der dritte Multiplizierer (24) den Wert ($\alpha$) des dritten Registers (13) mit dem Wert (k') des zweiten Zählers (25) multipliziert,
    **dass** der zweite Addierer (23) den Ausgabewert des ersten Multiplizierers (17) von dem Ausgabewert des dritten Multiplizierers (24) subtrahiert, und
    **dass** der Ausgabewert ($w_k$) des zweiten Addierers (23) direkt der Eingabewert der Trigonometrie-Einrichtung (18) ist.

5.  Anordnung nach Anspruch 1,
    **dadurch gekennzeichnet,**
    **dass** die Anordnung weiterhin einen zweiten Addierer (32) und einen zweiten Multiplizierer (33) beinhaltet,
    **dass** der erste Multiplizierer (31) den Wert (A) des zweiten Registers (12) direkt mit dem Ausgabewert des ersten Addierers (30) multipliziert,
    **dass** der zweite Addierer (32) den Ausgabewert des ersten Multiplizierers (31) zu einen aus dem Wert des ersten Zählers (10) gebildeten Wert ($k_m$) addiert.

6.  Anordnung nach Anspruch 5,
    **dadurch gekennzeichnet,**
    **dass** die Anordnung weiterhin ein drittes Register (13) beinhaltet,
    **dass** der zweite Multiplizierer (33) den Ausgabewert des zweiten Addierers (32) mit dem Wert ($\alpha$) des dritten Registers (13) multipliziert, und
    **dass** der Ausgabewert ($w_k$) des zweiten Multiplizierers (33) direkt der Eingabewert der Trigonometrie-Einrichtung (18) ist.

7.  Anordnung nach einem der Ansprüche 1 bis 6,
    **dadurch gekennzeichnet,**
    **dass** der erste Zähler (10) mit einem Startwert ($k_0$) beaufschlagbar ist.

8.  Anordnung nach einem der Ansprüche 1 bis 7,
    **dadurch gekennzeichnet,**
    **dass** die Register (11, 12, 13) und/oder die Addierer (15, 23, 30, 32) und/oder die Multiplizierer (16, 17, 24, 31, 33) und/oder die Zähler (10, 25) und/oder die Modulo-Einrichtung (14) und/oder die Trigonometrie-Einrichtung (18) mittels eines Mikroprozessors, eines FPGAs oder eines ASIC realisiert sind.

**Claims**

1.  Arrangement for producing polyphase sequences, comprising a first adder (15, 30), a first multiplier (17, 31), a first register (11), a second register (12), a first counter (10) and a trigonometry device (18).
    wherein the first adder (15, 30) adds a value ($k_m$), formed from the value of the first counter (10), to the value (B) of the first register (11),
    wherein the first multiplier (17, 31) multiplies the value (A) of the second register (12) by a value (y) formed from the value (B) of the first register (11) and the value (k) of the first counter (10),
    wherein the trigonometry device (18) forms the real part and the imaginary part of the present value ($a_k$, $s_k$) of the polyphase sequence from a value ($w_k$) formed at least from the output value of the first multiplier (17, 31),
    wherein the arrangement further comprises a modulo device (14),
    wherein the modulo device (14) forms the modulo N ($k_m$) of the value (k) of the first counter (10), wherein the first adder (15, 30) adds the modulo N ($k_m$) of the value (k) of the first counter (10) to the value (B) of the first register (11), and wherein N is the length of the polyphase sequence.

2.  Arrangement according to Claim 1,
    **characterized**
    **in that** the arrangement further has a second multiplier (16),
    **in that** the second multiplier (16) multiplies a value ($k_m$), formed from the value of the counter (10), by the output of the first adder (15), and
    **in that** the value (y) formed from the value (B) of the first register and the value (k) of the first counter (10), said value (y) being formed by the first multiplier (17), is the output value (y) of the second multiplier (16).

3.  Arrangement according to Claim 2,
    **characterized**
    **in that** the output value ($w_k$) of the first multiplier (17) is directly the input value of the trigonometry device (18).

4.  Arrangement according to Claim 2,
    **characterized**
    **in that** the arrangement comprises a third register (13), a third multiplier (24), a second counter (25) and a second adder (23),
    **in that** the third multiplier (24) multiplies the value ($\alpha$) of the third register (13) by the value (k') of the second counter (25),
    **in that** the second adder (23) subtracts the output value of the first multiplier (17) from the output value of the third multiplier (24), and
    **in that** the output value ($w_k$) of the second adder (23) is directly the input value of the trigonometry device (18).

5.  Arrangement according to Claim 1,
    **characterized**
    **in that** the arrangement further comprises a second adder (32) and a second multiplier (33),
    **in that** the first multiplier (31) directly multiplies the value (A) of the second register (12) by the output value of the first adder (30), and
    **in that** the second adder (32) adds the output value of the first multiplier (31) to a value ($k_m$) formed from the value of the first counter (10).

6.  Arrangement according to Claim 5,
    **characterized**
    **in that** the arrangement further comprises a third register (13),
    **in that** the second multiplier (33) multiplies the output value of the second adder (32) by the value ($\alpha$) of the third register (13), and
    **in that** the output value ($w_k$) of the second multiplier (33) is directly the input value of the trigonometry device (18).

7.  Arrangement according to one of Claims 1 to 6,
    **characterized**
    **in that** a starting value ($k_0$) can be applied to the first counter (10).

8. Arrangement according to one of Claims 1 to 7, **characterized in that** the registers (11, 12, 13) and/or the adders (15, 23, 30, 32) and/or the multipliers (16, 17, 24, 31, 33) and/or the counters (10, 25) and/or the modulo device (14) and/or the trigonometry device (18) are realized using a microprocessor, an FPGA or an ASIC.

**Revendications**

1. Montage pour la génération de séquences polyphases, comportant un premier additionneur (15, 30), un premier multiplicateur (17, 31), un premier registre (11), un deuxième registre (12), un premier compteur (10) et un dispositif de trigonométrie (18),
   où le premier additionneur (15, 30) additionne une valeur ($k_m$) formée à partir de la valeur du premier compteur (10) à la valeur (B) du premier registre (11),
   où le premier multiplicateur (17, 31) multiplie la valeur (A) du deuxième registre (12) avec une valeur (y) formée à partir de la valeur (B) du premier registre (11) et de la valeur (k) du premier compteur (10),
   où le dispositif de trigonométrie (18) forme la partie réelle et la partie imaginaire de la valeur ($a_k$, $s_k$) actuelle de la séquence polyphases à partir d'une valeur ($w_k$) formée à partir d'au moins la valeur de sortie du premier multiplicateur (17, 31),
   où le montage comprend en outre un dispositif de modulo (14),
   où le dispositif de modulo (14) forme le modulo N ($k_m$) de la valeur (k) du premier compteur (10),
   où le premier additionneur (15, 30) additionne le modulo N ($k_m$) de la valeur (k) du premier compteur (10) à la valeur (B) du premier registre (11), et
   où N est la longueur de la séquence polyphases.

2. Montage selon la revendication 1, **caractérisé en ce que** ledit montage est pourvu en outre d'un deuxième multiplicateur (16),
   **en ce que** le deuxième multiplicateur (16) multiplie une valeur ($k_m$) formée à partir de la valeur du compteur (10) avec la sortie du premier additionneur (15), et
   **en ce que** la valeur (y) formée à partir de la valeur (B) du premier registre (11) et la valeur (k) du premier compteur (10), laquelle est formée par le premier multiplicateur (17), est la valeur de sortie (y) du deuxième multiplicateur (16).

3. Montage selon la revendication 2, **caractérisé en ce que** la valeur de sortie ($w_k$) du premier multiplicateur (17) est directement la valeur d'entrée du dispositif de trigonométrie (18).

4. Montage selon la revendication 2, **caractérisé en ce que** ledit montage comprend un troisième registre (13), un troisième multiplicateur (24), un deuxième compteur (25) et un deuxième additionneur (23),
   **en ce que** le troisième multiplicateur (24) multiplie la valeur ($\alpha$) du troisième registre (13) avec la valeur (k') du deuxième compteur (25),
   **en ce que** le deuxième additionneur (23) soustrait la valeur de sortie du premier multiplicateur (17) de la valeur de sortie du troisième multiplicateur (24),
   et **en ce que** la valeur de sortie ($w_k$) du deuxième additionneur (23) est directement la valeur d'entrée du dispositif de trigonométrie (18).

5. Montage selon la revendication 1, **caractérisé en ce que** ledit montage comprend en outre un deuxième additionneur (32) et un deuxième multiplicateur (33),
   **en ce que** le premier multiplicateur (31) multiplie la valeur (A) du deuxième registre (12) directement avec la valeur de sortie du premier additionneur (30),
   **en ce que** le deuxième additionneur (32) additionne la valeur de sortie du premier multiplicateur (31) à une valeur ($k_m$) formée à partir de la valeur du premier compteur (10).

6. Montage selon la revendication 5, **caractérisé en ce que** ledit montage comprend en outre un troisième registre (13),
   **en ce que** le deuxième multiplicateur (33) multiplie la valeur de sortie du deuxième additionneur (32) avec la valeur ($\alpha$) du troisième registre (13),
   et **en ce que** la valeur de sortie ($w_k$) du deuxième multiplicateur (33) est directement la valeur d'entrée du dispositif de trigonométrie (18).

7. Montage selon l'une des revendications 1 à 6, **caractérisé en ce qu'**une valeur initiale ($k_0$) peut être appliquée au premier compteur (10).

8. Montage selon l'une des revendications 1 à 7, **caractérisé en ce que** les registres (11, 12, 13) et/ou les additionneurs (15, 23, 30, 32) et/ou les multiplicateurs (16, 17, 24, 31, 33) et/ou les compteurs (10, 25) et/ou le dispositif de modulo (14) et/ou le dispositif de trigonométrie (18) sont réalisés au moyen d'un microprocesseur, d'un FPGA ou d'un ASIC.

**Fig. 1**

**Fig. 2**

EP 2 243 236 B1

Fig. 3

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1314997 A1
- US 20050128938 A1